# EUROPEAN PATENT APPLICATION

(11) **EP 2 779 641 A2**
(43) Date of publication of application: **17.09.2014**
(21) Application number: 14152019.7
(22) Date of filing: 21.01.2014
(51) Int. Cl.: H04N 7/18, H04N 7/10

(54) **Closed circuit video monitoring system**

(30) Priority: 14.03.2013 US 201313826380
(71) Applicant: Nitek International LLC, Rolling Meadows, IL 60008 (US)
(72) Inventor: Hertrich, James P., Arlington Heights, IL 60005 (US); Johnson, Thomas Finis, Schaumburg, IL 60173 (US)
(74) Representative: Moore, Barry

(57) **Abstract**

An IP video surveillance system is able to combine IP video camera transmission, control functions for at least one IP camera and other network equipment, power over Ethernet (PoE) power for network equipment, diagnostics and analytic capabilities for system management and monitoring, with an existing coaxial cable infrastructure, twisted pair wire, or multi-channel twisted pair wire (category cable). The system interfaces to a network and further provides the capability to operate at distances well beyond network standards.

## Description

### FIELD OF THE INVENTION

The disclosed system and methods of the present application relate to internet protocol (IP) communication networks that use video systems. Particularly, the system and methods relate to video, data, power, distribution and management facilities that utilize untraditional network cabling to achieve network distribution beyond traditional network standards, including those IP networks of the type used in video security systems.

### BACKGROUND

For many years, video security systems were primarily of closed circuit (CC) design, employing analog cameras, monitors and other peripheral devices in a separate "closed system", meaning that each camera of the system was directly connected by a coaxial cable to head-end equipment for viewing, monitoring and/or recording of video images. This is known as closed circuit TV or CCTV.

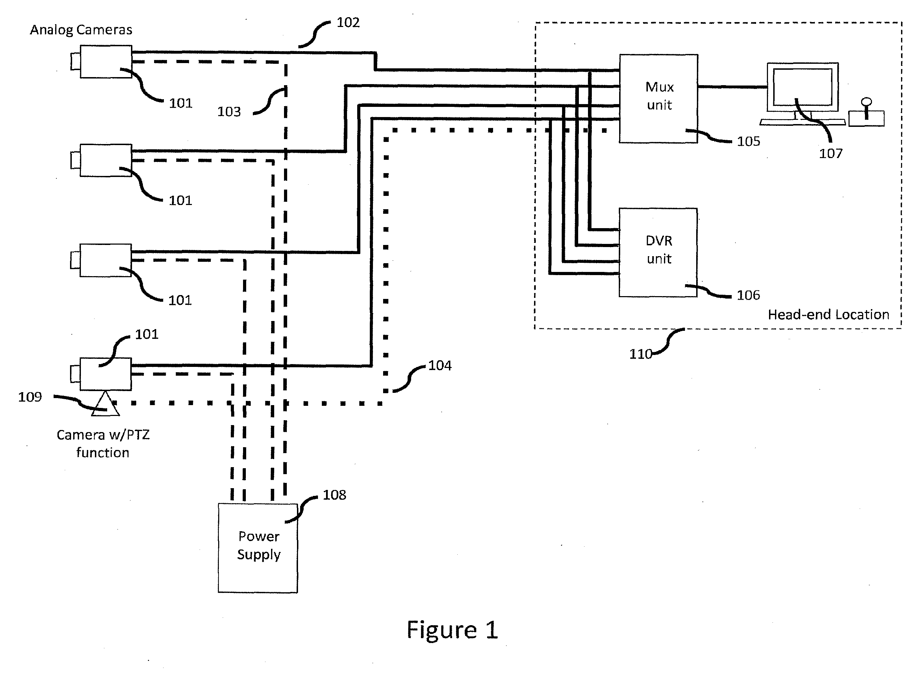

Such systems 100 generally ranged in complexity but, as illustrated in FIG. 1, all included analog cameras 101, power supplies 108, recording equipment 106, such as a DVR (Digital Video Recorder) and a method of viewing or monitoring video. The viewing was commonly done at a head end location where the individual cameras feed into a multiplexer unit 105. The multiplexer 105, commonly referred to as a "mux", allowed a user to view individual or multiple cameras on a monitor 107. Other systems commonly included PTZ (Pan/Tilt/Zoom) cameras 109 which enable an operator to move the video camera and zoom in for better viewing.

Further, as shown, there is a variety of cabling in these systems. The video signal from the analog cameras 101 typically use coaxial cables 102, while 16 or 18 AWG twin-lead wire 103 was most often used to power the cameras 101, and 18 to 24 AWG twisted pair (UTP) wire 104 is used for the PTZ control 109.

Generally, CCTV systems can range from a few cameras to hundreds of cameras and are an important part of the security systems used in airports, casinos, jails, and many other locations. The coaxial cable 102 and UTP cable 104 used can often be as long as 1500 feet or more and often run through many communication closets on the way back to a head-end location 110. Power to operate the cameras often comes from several separate locations, different from the head-end 110. Having separate wiring increases the complexity of installing and maintaining a CCTV system.

In recent years, due to the introduction of Internet Protocol (IP) cameras, there has been a migration away from using analog video. IP cameras offer certain capabilities which many CCTV system designers and integrators find superior and advantageous. This migration has continued to gather momentum to a point where IP cameras are now being considered for most new security system designs.

Some of the advantages of IP cameras include higher image resolution, system flexibility for moves, adds and changes, local video analytics, video, power and PTZ commands via a single network cable, and the replacement of numerous Digital Video Recorder (DVR) and Multiplexer units by a single Network Video Recorder (NVR) or server based recording/viewing system. The change from analog cameras to IP cameras has also been accompanied by the implementation of Power over Ethernet (PoE) to power the IP cameras and other network devices.

IP cameras were introduced in the late 1990's for use on computer networks. An IP camera is primarily identified by the fact that it has an Ethernet jack to communicate video, in a compressed format, over a computer network and/or the Internet. An Internet Protocol (IP) based network is a network of devices that share a common physical connection and use Internet Protocols for network communication.

Standard IP video network installations utilize category cabling to interconnect all of the IP camera devices in a system. Category cable is also called CAT5 or CAT6 wire and refers to four pair cable used in computer networking. IEEE specifications limit these network segments over category cable to a maximum length of 100 meters (328 feet) when using network switches and devices. This limitation necessitates implementation of communication closets, commonly called IDF facilities, every 100 meters when standard network devices are utilized. In its simplest configuration, an IDF requires the use of a network switch and a power source. This can be a limiting and inconvenient problem in security applications.

For example, as noted above, security cameras can be located in numerous different locations in directions far from the head-end, sometimes well beyond 100 meters. While a typical computer network is focused inward to the office areas of a facility, security systems often focus outward to the perimeter of a facility. The logistical issues are abundant and clear. By comparison, standard RG59U coaxial cable has been used in many CCTV security systems to connect cameras often at lengths beyond 300 meters (over 1,000 feet). In analog camera CCTV systems, utilizing coaxial cable to connect cameras to head-end equipment was the industry standard for many years and is used in the great majority of CCTV installations.

The concept of sending Ethernet over Coax is commonly referred to as "EOC" and has existed in various configurations to operate IP cameras over coaxial cable, the first version of EOC was Token ring. The concept has not, however, been integrated as a complete system to include multi-port receiver units with separate controlled PoE channels, thereby providing PoE on demand and including built-in managed gigabit network switches with numerous specific network based monitoring and analytical functions that can be accessed and viewed remotely. An EOC system requires a transceiver-type unit at each end of the coaxial cable. Additionally, new IP cameras operate using PoE power and the power draw of these cameras can vary widely. Such additional functions and features can be of great benefit in security systems but add to the complexity of the system.

Installing and maintaining CCTV systems can be greatly improved by having an ability to check and report the status of all the components. For example, being able to determine that video from a camera was lost because a cable was cut 300 feet from the head-end or that the camera is no longer drawing power even though all the cables are intact and working, means that a technician can know where a problem is before going to a job site. This can significantly shorten downtime and save cost.

The present system and methods solve the above-problems as well as other problems associated with some existing CCTV systems. Embodiments of the disclosed system are able to simplify overall cabling, reuse existing coax cable (if available), reduce overall equipment requirements, increase system capabilities, and provide status and diagnostic information. The disclosed system and methods provide such features without sacrificing performance, capacity, reliability or cost-effectiveness.

### SUMMARY

An IP video security interface system which operates over a network, as well as methods for implementing and operating such a system, are described. Generally speaking, the disclosed system comprises at least one Internet protocol (IP) camera connected to a transmitter, a receiver/controller/management (RCM) unit connected to the transmitter of each IP camera via standard CCTV coaxial cable, and a recording/viewing station electronically coupled to the RCM.

In a specific embodiment, the system utilizes unique transmitters and multi-channel receiver devices which include a power supply for powering the transmitter units and the cameras attached to the transmitters. The system combines camera video, control functions, PoE power for network equipment and cameras, system analytics and system management capabilities. The combined system provides the delivery of these functions over standard CCTV coaxial cable. The combined IP video security system data, functions and PoE are designed to operate within IEEE standards and coexist within an IP network.

In an embodiment, the IP video security interface provides a method of integrating a complete IP video solution for operation over existing infrastructure coaxial cable. Preferably, the multi-channel RCM unit interfaces with a gigabit switch to the IP network and also connects to individual coaxial cable from corresponding transmitter units. The transmitters are connected by category cable to the IP cameras. If the transmitter is not powered separately, PoE power is supplied from the RCM unit to each of the transmitters and then in turn to the cameras. Preferably, power is supplied only when required by the connected network cameras or other network devices.

In an embodiment of the RCM unit, it is designed to monitor critical network functions, i.e., link status, link speed, cable length, cable continuity, distance to a cable open or short, status of cable pairs, and potentially similar data. The RCM may also provide real-time current readings of each of the network devices, control of individual current settings for each PoE output, thermal shutdown alert, and temperature level monitoring. The RCM may provide for logging of events, e.g., current overloads and thermal shutdowns.

A user interface provides for viewing a Web page for the RCM. The web page allows users to view and interact with the analytical and monitoring capabilities of the RCM. An access code/user name and password restrict access to the Web interface of the RCM.

An aspect of an embodiment of the video system is the provision of an IP-based multi-channel head-end receiver/controller/management unit (RCM) in a video security system to provide all of the required operational, control and monitoring functions over a single coaxial cable to each IP camera or network device.

Another aspect of an embodiment of the system is a remote unit that communicates over coaxial cable and receives power from the RCM, operating in conjunction with the RCM sending video and status information to the RCM.

Another aspect of an embodiment is the capability of the remote unit to provide IP video to the RCM, PoE to IP cameras and other network devices (if a valid PoE signature is detected), receive control data from the RCM and provide unique management and analytical information to the RCM, all to be transmitted over the single coaxial cable.

Another aspect of the embodiment is the remote unit meets IEEE standard for providing and controlling voltage supplied to the IP cameras. It does this through detecting the signature provided from the IP camera or other POE power device.

Another aspect of embodiments of the system is that it will provide all of the required operational, control and monitoring functions over a single coaxial cable at a distance of 500 meters (1,640 feet).

Another aspect of embodiments of the system is the provision in the RCM of one or more gigabit switch devices to enable unrestricted data throughput and to interface with the network by means of standard category cables.

A still further aspect of embodiments is the capability of the RCM to provide critical monitoring functions over the single coaxial cable, including, but not limited to, link status, link speed, cable length, cable continuity, distance to a cable open or short and status of cable pairs.

A still further aspect of embodiments is the capability of the RCM to provide additional monitoring, including but not limited to, real-time current readings of each of the network devices, control of individual current settings for each PoE output, thermal shutdown alert and temperature level monitoring.

In an alternate embodiment of the system is to replace the coaxial cables with a single twisted pair wire. All other aspects of the system would remain as described in the embodiments.

In a still further alternate embodiment of the system a plurality of wire pairs can replace the coaxial cable. In such an embodiment short cable under 100 meters in length would not need a transmitter unit but lengths over 100 meters could use a transmitter and would function as described in all of the other embodiments.

Finally, without being an exhaustive list of features, further aspects of embodiments include the capability of the RCM to provide for logging of events, including, but not limited to current overloads and thermal shutdowns; a user webpage interface that provides for viewing a webpage for the RCM that allows users to view and interact with the analytical and monitoring capabilities of the RCM, either on a local network or over the internet; the capability of a user webpage interface to provide a layered entry capability that allows access to basic simple features by less qualified users and allows access to the advanced features of the system by advanced users; and, the capability of a user webpage to provide user name and password for secured access to each layer of entry.

Accordingly the present teaching provides a system and method as detailed in the independent claims. Advantageous features are detailed in the dependent claims.

### Brief Description of the Drawings

For the purpose of facilitating an understanding of the subject matter sought to be protected, there are illustrated in the accompanying drawings embodiments thereof, from an inspection of which, when considered in connection with the following description, the subject matter sought to be protected, its construction and operation, and many of its advantages should be readily understood and appreciated.
FIG. 1 is a schematic of a prior art CCTV system using analog cameras;
FIG. 2 is a schematic of an embodiment of the present CCTV system using IP cameras;
FIG. 3 is a schematic of an embodiment of a transmitter unit in accordance with the present disclosure;
FIG. 4 is a schematic of an embodiment of a RCM unit in accordance with the present disclosure;
FIG. 5 is a schematic of (a) a coax cable interface for the transmitter unit of FIG. 3, and (b) a UTP cable interface for the transmitter unit of FIG. 3; and
FIG. 6 is a schematic (a) a coax cable interface for the RCM unit of FIG. 4, and (b) a UTP cable interface for the RCM unit of FIG. 4.

### Detailed Description of Preferred Embodiments

While this invention is susceptible of embodiments in many different forms, there is shown in the drawings and will herein be described in detail a preferred embodiment of the invention with the understanding that the present disclosure is to be considered as an exemplification of the principles of the invention and is not intended to limit the broad aspect of the invention to embodiments illustrated.

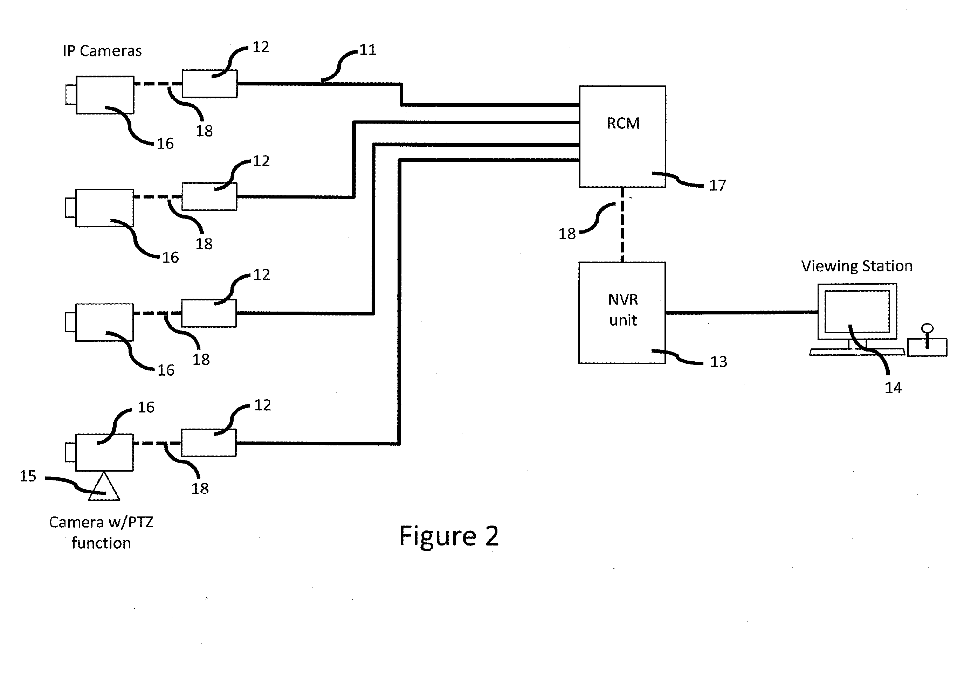

Referring to FIGS. 2-6, there are illustrated embodiments of a CCTV video system, including components of the system, generally designated by the numeral 10. Such a system 10 consists of at least two items: a receiver and a transmitter. Specifically, the receiver or head end unit is capable of monitoring, controlling and management functions of the system 10. The preferred head end unit is known as an RCM (receiver/controller/management) unit. The transmitter unit is preferably a remote device.

The RCM unit 17 and transmitter units 12 work in tandem to gather data about the overall system 10. The transmitter unit 12 is capable of testing the cable between itself and the camera 16 or any other IP device to which it is connected. Additionally, the transmitter unit 12 will be able to monitor functions such as voltage, current communication speed and temperature. After gathering such data it can communicate that data back up the cable 11 to the RCM unit 17. The RCM unit 17 incorporates an Ethernet connection or other means to allow access for the purposes of troubleshooting, monitoring, and measuring the performance of system 10. These features go beyond what is required for basic Ethernet communication and the purpose is to provide technical information about the stability and operation of system 10, as well as minimize downtime and speed up installation.

Generally, a complete IP camera video system 10 includes at least one IP camera 16 connected to a transmitter unit 12, which connects via coaxial cable runs 11 to a receiver/controller/management (RCM) unit 17. The RCM unit 17 interfaces with an IP network for data manipulation, the scope of which is described below. A preferred network includes a network video recorder (NVR) 13 and a user viewing/work station 14.

A typical configuration of an embodiment of the present system 10, which is capable of using the existing coaxial cable infrastructure 102 of an analog camera system as illustrated in FIG. 1, is shown in Figure 2. The IP cameras 16 replace the old analog cameras (101 of FIG. 1). Each IP camera 16 connects to a transmitter unit 12, preferably via a standard network patch cable 18. Each transmitter unit 12 connects to an existing coaxial cable run 11 at the camera end. The RCM unit 17 replaces the multiplexer unit (105 of FIG. 1). The RCM unit 17 connects to the head-end side of the coaxial cable runs 11 and is also connected to the NVR 13 (or a server unit) for recoding and viewing of the IP camera data. Preferably, power for operating the IP cameras 16 is supplied by the RCM unit 17 to the transmitter units 12 through the coax cable runs 11 and into the IP cameras 16.

The NVR 13 is a software based recording and viewing system which allows for the controlling of a pan/tilt/zoom (PTZ) camera unit 15. Viewing of the camera images can be done, for example, on a standard computer monitor 14 connected to a network, such as the IP network. Alternatively, the viewing can take place remotely from another computer terminal connected to the Internet and logged to a dedicated website.

Upon startup the system begins in a test and diagnostic mode. In this mode it gathers data and statistics about the network connected to the RCM unit 17. The transmitter units 12 are then powered up and each may begin to gather information about their status of operation, including information related to an attached/detached IP camera, power requirements, and similar operational information. Such data may be gathered and sent to the head-end RCM unit 17 where it may be combined with additional information. The information may be displayed on a web page or other interface page for a service technician or network administrator to review.

Further, different alarm levels may be set up for static parameters. For example, if a unit were to fall below a set level of voltage, current, data speed or any other fault point, an alarm could be sent to a service tech or network administrator to alert them.

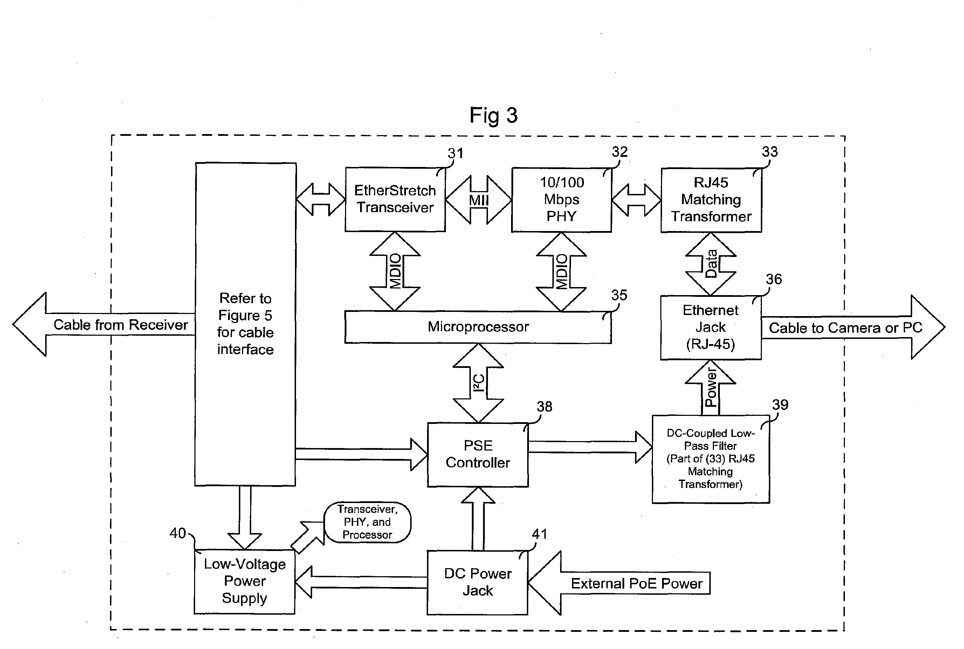

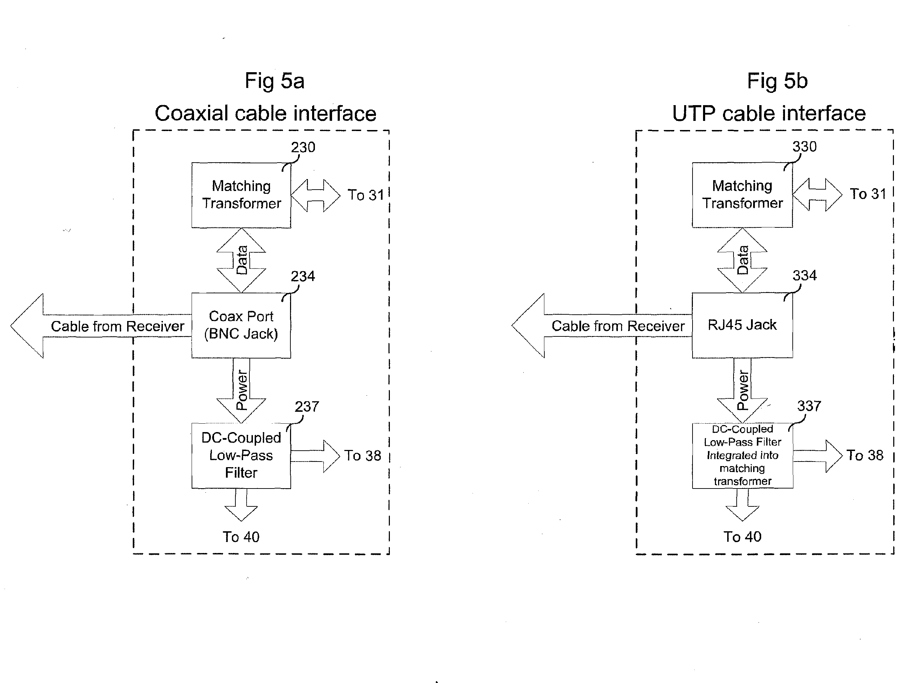

Referring now to FIG. 3, internal components and operation of an embodiment of transmitter unit 12 can be seen in greater detail. The transmitter unit 12 is located at a remote end of the existing communication cable--i.e., the coaxial cable run 11. The unit 12 communicates to the RCM unit 17 via the coaxial cable run 11. An incoming signal from the RCM unit 17 is applied to matching transformer 230 (see coaxial cable interface, FIG. 5(a)). The matching transformer 230 is used to provide proper impedance matching between the communication cable and the internal transceiver circuits and can be adjusted as needed depending on the application.

In an alternate embodiment shown in FIG. 5(b), the cable interface can easily be changed to UTP/category cable simply by changing the matching transformer, the cable connector and the DC-coupled low-pass filter. All other components of system 10 would remain the same. Whereas a coaxial matching transformer 230 is usually designed to couple 75 ohm coax to a 100 ohm EtherStretch™ transceiver, the UTP matching transformer 330 is designed for 100 ohm to 100 ohm coupling. Such is the operation of the EtherStretch™ transceiver that the UTP cable could be a single pair of wires, as coaxial cable is just two conductors, or it could be up to four pair of conductors, as in normal network cabling. The incoming signal consists of an AC communication signal and a DC power signal. The DC power signal passes through a low-pass filter 237 into both a low-voltage power supply 40 and a PSE controller 38. The low-voltage power supply 40 is used to provide a regulated voltage for the internal circuits of the transmitter unit 12 and only needs a small amount of current and voltage to begin operation.

The AC communication signal passes through the matching transformer 30 and is coupled to a transceiver 31. Preferably, transceiver 31 is an EtherStretch™ transceiver designed, manufactured and sold by Nitek International, LLC of Rolling Meadows, IL. The EtherStretch™ transceiver 31 works much like a standard Ethernet PHY. In fact, the EtherStretch™ transceiver is a preferred embodiment because it can work as both a standard PHY for network communication with category wire or over a single pair of wires like one wire pair or a coaxial cable. Therefore, the EtherStretch™ PHY can easily be coupled to several different wire types to meet potential applications. It transmits data to and receives data from the RCM unit 17. The transceiver 31 also adjusts its communication as needed to facilitate communication with the RCM unit 17. The transceiver 17 provides a standard MII communications bus for connection to a 10/100 Ethernet PHY 32 and it has a MIDO port for communication with a microprocessor 35. The 10/100 PHY 32 is used to handle communication with the IP camera or another attached Ethernet device. It is coupled to a standard RJ45 Ethernet jack 36 via a matching transformer 33. The 10/100 PHY 32 is also coupled to the microprocessor 35 via a MIDO bus. It can be seen that communication between any standard Ethernet device and the RCM unit 17 is easily facilitated via the transmitter unit 12.

In the illustrated embodiment, the transmitter unit 12 additionally has the ability to provide PoE power to Ethernet devices, including IP cameras 16. The PSE controller 38 is coupled to a RJ45 Ethernet jack 36 via low-pass filter 39. Most commonly this low-pass filter 39 is a function of the matching transformer 33 and could be provided as a single component--i.e., a matching transformer and low-pass filter in one. The PSE controller 38 is controllable via the microprocessor 35.

In some cases the cable 11 between the RCM unit 17 and the transmitter unit 12 is too long or too small of a wire gage to carry enough current to operate a PoE device beyond the transmitter unit 12, or there may be times when it is not desired to transmit the DC voltage from the RCM unit 17 to the transmitter unit 12. For such cases a DC power jack 41 allows for directly powering each transmitter unit 12.

Preferably, the microprocessor 35 has connections to incoming and outgoing communications and the PSE controller 38. While the unit may function without a microprocessor 35, the preferred microprocessor 35 is designed to poll components and monitor functions of the system 10--microprocessor 35 is for controlling and polling the transmitter unit 12 and the IP camera connection, while, as noted below, the RCM unit 17 has its own microprocessor for polling and communication with system 10.

The RCM unit 17 includes a CPU controller 56. The RCM CPU controller 56 preforms several task, preferably one of which is to also monitor components of the system 10. The CPU controller 56 will include connections to incoming and outgoing communications and the PoE+ controller 60. Monitored functions can include determining speed of communication, whether an IP device is connected to the RCM unit 17, whether a cable is connected, the length of the cable, whether the cable is operable, whether PoE power is on, how much current a connected device is using, and other similar operational parameters and functions. Such information may be critical during system installation and during downtime situations. Also, it can be used to monitor whether a system is changing in such a way that future failures could be detected before they occur.

The transmitter units 12 can also be used to detect where a fault occurred. For example, if a cable is cut, the system 10 could inform an operator of the distance from the transmitter unit to the IP camera where the cut occurs. An additional feature of the transmitter unit 12 is the fact that it communicates to the RCM unit 17 via an MDIO port of the EtherStretch™ transceiver 31. Information on system status can be communicated via "Next Page" messaging of the EtherStretch™ transceiver 31.

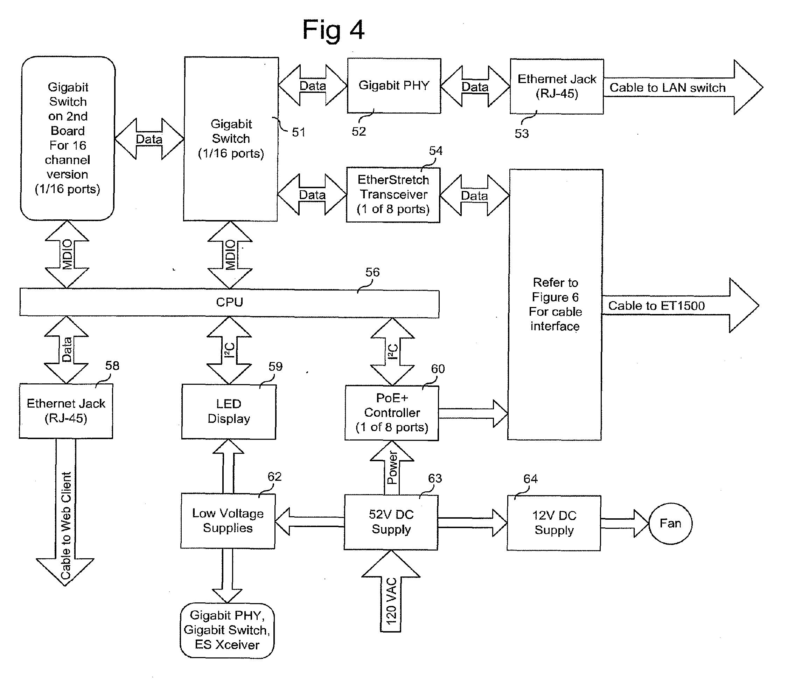

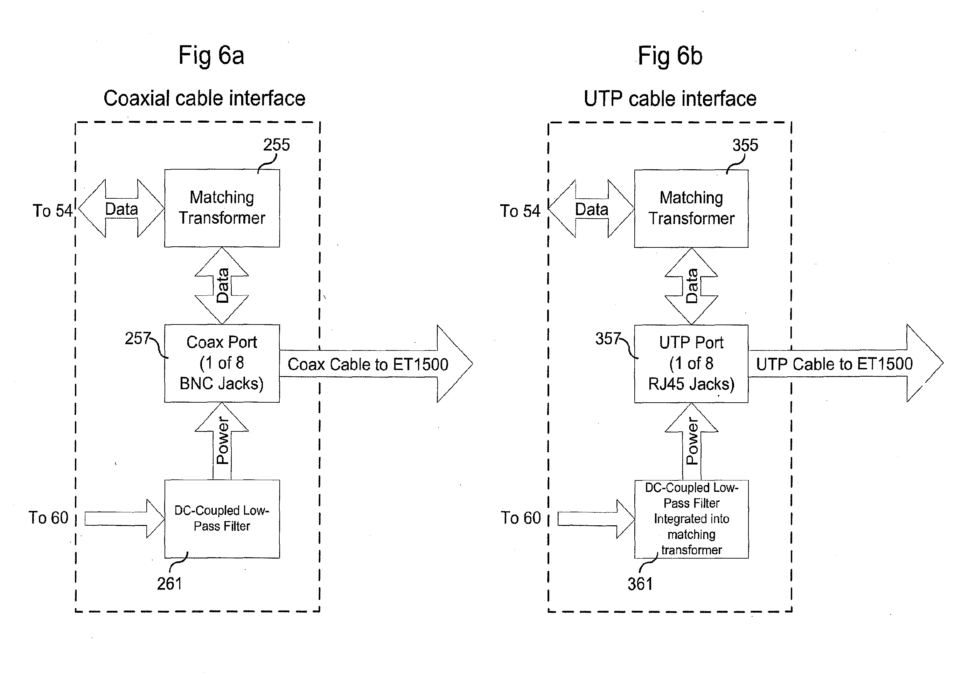

Referring now to FIG. 4, an embodiment of the RCM (receiver/controller/management) unit 17 is illustrated. The RCM unit 17 is located at the monitoring end of CCTV system 10. The RCM unit 17 communicates with each transmitter unit 12 via coaxial cable runs 11. The coaxial cable runs 11 are connected between a BNC output jack 257 of the RCM unit 17 and the BNC jack 234 of the transmitter unit 12 (see also FIG. 6(a)).

Alternately, with reference to FIG. 6(b), the BNC jacks 257 and 234 could be replaced with RJ45 jack 357 and 334, respectively, or another connector for UTP/category wire. Again, this is enabled because the EtherStretch™ transceiver can function as both a standard PHY or communicate on a single pair of wires. Therefore, while the main parts of system 10 are unchanged, at least three different types of cabling can be addressed: 1) the interfacing to a coaxial cable; 2) the interfacing to a single twisted pair; and 3) the interfacing to a multi-pair cable. In the case of the use of multi-pair cable, this is designed to interface primarily to network cabling.

While embodiments of a coaxial interface are described in detail and embodiments of a single twisted pair are easily translated from the two conductors of the coax, multi-pair interface embodiments require the following further explanation.

Commonly 10/100 network cabling is installed using structured twisted pair wire, also called category cable. This cable is constructed of four separate twisted pair wires. Signals of 10 and 100-megabit are commonly communicated over only two pairs for normal network communication. Gigabit communication uses all four pairs. By design, the EtherStretch™ transceiver can communicate with standard PHY transceivers. Therefore it can be seen that an RCM unit with the EtherStretch™ transceiver coupled to an RJ45 network could function as a common POE network switch. Further, it can be seen that when combining a transmitter unit 12 with such an RCM unit 17, standard network cabling lengths can be greatly extended. Such a system would allow for network runs of 600 meters or more without having to repeat the signal each 100 meters.

Upon power up, the RCM unit 17 establishes communication with each of the remote transmitter units 12. As noted above, the transmitter units 12 can get operational power from the RCM unit 17 or they can be powered independently. Preferably, the RCM unit 17 will power the transmitter units 12. Power up occurs by first supplying DC power to the transmitter units 12. DC power is supplied through and controlled by POE+ controller 60 of the RCM unit 17. The POE+ controller 60 couples power through the DC low-pass filter 61 to the BNC jacks 57. Once the transmitter units 12 are powered up, communication can begin.

The EtherStretch™ transceiver 54 of the RCM unit 17 establishes a connection to the EtherStretch™ transceiver 31 of the transmitter unit 12. During the start up of communication, the status of the transmitter unit 12 operation is passed to the RCM unit 17. If no transmitter unit is connected to the end of the coax cable run 11, the RCM unit 17 could, using the EtherStretch™ transceiver 54, determine if the cable is open or shorted and even the length of the cable. Again, as previously noted, this feature can be helpful during installation as well as in repairing the system due to operational faults.

The status of the transmitter unit 12 can include, but is not limited to, current and voltage used by the transmitter unit, communication status of the network port of the transmitter, whether a PoE device is connected to the transmitter, whether the network port of the transmitter unit is connected to a damaged or non-functional network cable, and other similar operational parameters. Again, this data may be helpful in determining status of operation, reasons for failure of the system 10, and system advanced diagnostics.

The EtherStretch™ transceiver 54 of the RCM unit 17 couples communication data through matching transformer 255. The matching transformers 255 are used for electrical isolation of the EtherStretch™ transceiver 54 from the coaxial cable run 11 and to properly match the impedance of the connected coaxial cable 11 to the RCM unit 17. As was stated earlier, the matching transformer 255 of the RCM could be changed to a matching transformer 355 for UTP/category cable operation.

It is important to point out that the changing of just three componets between the coaxial cable interface and the UTP/category cable interface will allow the same system to work over many different cable types. All other functions of the design can remain the same.

The RCM unit 17 also incorporates a multiport gigabit switch 51. The gigabit switch 51 couples all of the ports of the RCM unit 17 together and functions as a standard switch. It can function as a layer 2 or layer 3 switch and the management functions of the RCM unit 17 will not be affected. The RCM unit 17 should also preferably incorporate a CPU controller 56. The CPU controller 56 also monitors components of the system 10. The CPU controller 56 communicates via standard buses and communication ports to various components of the RCM unit 17. Some of the common buses include the MDIO and I2C buses. Using these buses, the CPU controller 56 communicates with the EtherStretch™ transceivers 54, gigabit switch 51, gigabit PHY 52, LED display 59, POE controller 60, and web client 58.

The gigabit PHY 52 is used as a connection to a LAN. Generally, the EtherStretch™ transceiver ports are communicating at 10Mb or 100Mb. The gigabit switch 51 of the RCM unit 17 combines the numerous lower speed ports into a higher speed port for passing large amounts of data upstream to recorders and display systems. Also, the gigabit switch 51 allows for connection to add-on boards, which allow the RCM unit 17 to incorporate many more ports into a single unit. The gigabit switch 51 can also be connected to fiber devices such as a BiDi or SFP laser for optically interfacing to the network.

The LED display 59 allows for a visual indication of the system status and can be used to display system malfunctions. The use of the LED display 59 would offer the advantage of not needing a web client connection if, for example, a service technician is so inclined.

The PoE controller 60 allows for the monitoring of voltage and current coupled to the communication cables, remote transmitters and remote PoE equipment.

A separate port is shown for the web client connection. While the CPU controller 56 could be connected directly to the internal gigabit switch 51 allowing the diagnostics to be viewed from anywhere in the system, the separate port dedicated to the web client allows for the physical control of this port. Alternatively, it could be connected to a special port allowing direct connection outside the network. This feature allows a service technician, for example, to connect into the system 10 remotely and view the status of the system 10 without actually having access to the network or being able to actually view the cameras. For security and privacy reasons this offers a unique advantage.

Finally, it should be noted that the system 10 is powered up from a main power input. A 52V DC supply 63 is preferably used because it can operate on a wide range of input voltages, for example 100 to 240 VAC. The 52V DC supply 63 feeds several low-voltage power supplies 62 which in turn supply the internally needed voltages for operating the electronics. One of the internal supplies is a 12V DC supply 64 used to operate system cooling fans. The system cooling fans could also be monitored by the CPU 56, if desired.

In the present embodiment of system 10, the PoE+ controller 60 incorporates a temperature monitoring function and, as such, would allow the CPU 56 to notify service personal either via an audible signal, visual signal, electronic record (e.g., email or text message) or a combination of these indicators, that specific system parameters (e.g., temperature) are exciding recommended operating conditions. The present teaching has been described with reference to exemplary arrangements, and it will be appreciated that the matter set forth in the foregoing description and accompanying drawings is offered by way of illustration only and not as a limitation. While particular embodiments have been shown and described, it will be apparent to those skilled in the art that changes and modifications may be made without departing from the broader aspects of applicants' contribution. The actual scope of the protection sought is intended to be defined in the following claims when viewed in their proper perspective based on the prior art Furthermore, the present teaching may also extends to one or more of the features of the following numbered clauses:
1. A closed-circuit video system comprising:
   a plurality of IP devices;
   a plurality of transmitter units, one of each transmitter units being electronically coupled to one of each IP devices;
   a multiport RCM unit connected to a power source and positioned remotely from each of the plurality of transmitter units;
   a plurality of coaxial cable runs, each having a first end connected to one transmitter unit and a second end connected to the RCM unit; and
   an network electronically coupled to the RCM unit;
   wherein power is transmitted to each transmitter unit from the RCM unit through a corresponding coaxial cable run.
2. The closed-circuit video system of Clause 1, wherein each IP device receives power from an electronically coupled transmitter unit.
3. The closed-circuit video system of Clause 1, wherein the RCM unit includes a network switch for electronically coupling to the network.
4. The closed-circuit video system of Clause 3, wherein the RCM unit comprises at least one microprocessor for controlling operation of the RCM network switch and power supplied to the transmitter units.
5. The closed-circuit video system of Clause 2, wherein each transmitter unit comprises at least one microprocessor for monitoring functions of and controlling power supplied to a coupled IP device.
6. The closed-circuit video system of Clause 3, further comprising a network video recorder coupled to the RCM unit.
7. The closed-circuit video system of Clause 1, wherein at least one of the plurality of IP devices is an IP camera.
8. A closed-circuit video system comprising:
   a plurality of IP devices;
   a plurality of transmitter units, one of each transmitter units being electronically coupled to one of each IP devices;
   a multiport RCM unit connected to a power source and positioned remotely from each of the plurality of transmitter units;
   a plurality of twisted pair wire runs, each having a first end connected to one transmitter unit and a second end connected to the RCM unit; and
   a network comprising a viewing station and electronically coupled to the RCM unit;
   wherein power is transmitted to each transmitter unit from the RCM unit through a corresponding twisted pair wire run.
9. The closed-circuit video system of Clause 8, wherein each IP device receives power from an electronically coupled transmitter unit.
10. The closed-circuit video system of Clause 8, wherein the RCM unit includes a network switch for electronically coupling to the network.
11. The closed-circuit video system of Clause 10, wherein the RCM unit comprises at least one microprocessor for controlling operation of the RCM network switch and power supplied to the transmitter units.
12. The closed-circuit video system of Clause 9, wherein each transmitter unit comprises at least one microprocessor for controlling power supplied to a coupled IP device.
13. The closed-circuit video system of Clause 10, further comprising a network video recorder coupled to the RCM unit.
14. The closed-circuit video system of Clause 8, wherein the plurality of IP devices comprise at least one IP camera.
15. A closed-circuit video system comprising:
   a plurality of IP cameras;
   a plurality of transmitter units, one of each transmitter unit being electronically coupled to one of each IP camera;
   a multiport RCM unit connected to a power source and positioned remotely from each of the plurality of transmitter units;
   a plurality of category cable runs, each having a first end connected to one transmitter unit and a second end connected to the RCM unit; and
   a network comprising a viewing station and electronically coupled to the RCM unit;
   wherein power is transmitted to each transmitter unit from the RCM unit through a corresponding category cable run.
16. The closed-circuit video system of Clause 15, wherein each IP camera receives power from an electronically coupled transmitter unit.
17. The closed-circuit video system of Clause 15, wherein the RCM unit includes a network switch for electronically coupling to the network.
18. The closed-circuit video system of Clause 17, wherein the RCM unit comprises at least one microprocessor for controlling operation of the RCM network switch and power supplied to the transmitter units.
19. The closed-circuit video system of Clause 16, wherein each transmitter unit comprises at least one microprocessor for controlling power supplied to a coupled IP camera.
20. The closed-circuit video system of Clause 17, further comprising a network video recorder coupled to the RCM unit.
21. A method for providing closed-circuit IP video at a facility using an existing coaxial cable system comprised of a plurality of coaxial cable runs, the method comprising the steps of:
   installing a plurality of IP cameras, with each IP camera electrically coupled to one of a plurality of transmitter units;
   for each IP camera, connecting one end of a coaxial cable run from the existing coaxial cable system to a suitable port of one of the transmitter units;
   connecting an opposite end of each coaxial cable run to a suitable port of an RCM unit;
   connecting the RCM unit to a network; and
   transmitting data from the plurality of IP cameras to the RCM via the coaxial cable runs.
22. The method of Clause 21, further comprising at least one of the steps of either recording the data and displaying the data.
23. The method of Clause 21, further comprising the step of monitoring system functions over the coaxial cable runs.
24. The method of Clause 23, wherein the step of monitoring system functions comprises reporting on at least one of link status, link speed, cable length, cable continuity, distance to a cable open or short, and status of cable pairs.
25. The method of Clause 23, wherein the step of monitoring system functions comprises reporting on at least one of operation parameters, real-time current readings, alerts, and temperature levels.

## Claims

1. A closed-circuit video system comprising:
a plurality of IP devices;
a plurality of transmitter units, one of each transmitter units being electronically coupled to one of each IP devices;
a multiport RCM unit connected to a power source and positioned remotely from each of the plurality of transmitter units;
a plurality of cable runs, each having a first end connected to one transmitter unit and a second end connected to the RCM unit; and
an network electronically coupled to the RCM unit;
wherein power is transmitted to each transmitter unit from the RCM unit through a corresponding coaxial cable run.

2. The closed-circuit video system of Claim 1, wherein the plurality of cable runs are comprised of at least one of either coaxial cable runs, twisted pair wire runs and category cable runs.

3. The closed-circuit video system of Claims 1 or 2, wherein each IP device receives power from an electronically coupled transmitter unit.

4. The closed-circuit video system of Claims 1 or 2, wherein the RCM unit includes a network switch for electronically coupling to the network.

5. The closed-circuit video system of any one of the preceding claims, wherein the RCM unit comprises at least one microprocessor for controlling operation of the RCM network switch and power supplied to the transmitter units.

6. The closed-circuit video system of any one of the preceding claims, wherein each transmitter unit comprises at least one microprocessor for monitoring functions of and controlling power supplied to a coupled IP device.

7. The closed-circuit video system of any one of the preceding claims, further comprising a network video recorder coupled to the RCM unit.

8. The closed-circuit video system of any one of the preceding claims, wherein at least one of the plurality of IP devices is an IP camera.

9. A method for providing closed-circuit IP video at a facility using an existing coaxial cable system comprised of a plurality of coaxial cable runs, the method comprising the steps of:
installing a plurality of IP cameras, with each IP camera electrically coupled to one of a plurality of transmitter units;
for each IP camera, connecting one end of a coaxial cable run from the existing coaxial cable system to a suitable port of one of the transmitter units;
connecting an opposite end of each coaxial cable run to a suitable port of an RCM unit;
connecting the RCM unit to a network; and
transmitting data from the plurality of IP cameras to the RCM via the coaxial cable runs.

10. The method of Claim 9, further comprising at least one of the steps of either recording the data and displaying the data.

11. The method of Claim 9, further comprising the step of monitoring system functions over the coaxial cable runs.

12. The method of Claim 11, wherein the step of monitoring system functions comprises reporting on at least one of link status, link speed, cable length, cable continuity, distance to a cable open or short, and status of cable pairs.

13. The method of Claim 11, wherein the step of monitoring system functions comprises reporting on at least one of operation parameters, real-time current readings, alerts, and temperature levels.
